# EUROPÄISCHE PATENTSCHRIFT

(11) **EP 1 970 114 B1**
(45) Veröffentlichungstag und Bekanntmachung des Hinweises auf die Patenterteilung: **02.05.2012**
(21) Anmeldenummer: 08002191.8
(22) Anmeldetag: 06.02.2008
(51) Int. Cl.: B01D 46/10, B01D 46/52, B01D 46/00

(54) **Filter, insbesondere Luftfilter, mit Flüssigkeitssammelvorrichtung**
Filter, particularly air filter, with fluid collection device
Filtre, en particulier filtre à air, doté d'un dispositif de collecte de liquide

(30) Priorität: 14.03.2007 DE 102007012358; 16.03.2007 DE 102007012721
(43) Veröffentlichungstag der Anmeldung: 17.09.2008
(73) Patentinhaber: Vokes Air GmbH & Co. OHG, 45549 Sprockhövel (DE)
(72) Erfinder: Geier, Alf-Edgar, 8620 Wetzikon (CH); Bernhard, Andreas, 8903 Birmensdorf (CH)
(74) Vertreter: Lang, Friedrich

(56) Entgegenhaltungen:
- EP-A1- 0 948 986
- DE-B- 1 299 534
- DE-C1- 19 715 755
- FR-A1- 2 812 379
- GB-A- 2 117 664
- US-A- 4 897 095
- US-A1- 2005 284 116
- US-B1- 6 190 432

## Beschreibung

Die Erfindung betrifft einen Filter gemäß den Merkmalen des Oberbegriffs des Anspruches 1. Mit Filter ist im Sinne dieser Anmeldung eine plattenartige Baueinheit gemeint, die ein Filtermedium (bspw. ein Filtervlies) und einen dieses Filtermedium haltenden Filter- bzw. Halterrahmen aufweist. Solche Baueinheiten werden auch als Filterzellen bezeichnet. Filter bzw. Filterzellen der betreffenden Art finden bspw. in der Frischluftversorgung von Industriegebäuden, Verwaltungsbauten und Krankenhäusern Verwendung und dienen der Reinigung bzw. Filtration der angesaugten Frischluft. Auch Energieerzeugungsanlagen wie Gasturbinen werden in der Regel solche Filter vorgesetzt, um die angesaugte Luft zu reinigen bzw. zu filtrieren, wobei der Filter in einem entsprechenden Ansauggehäuse angeordnet ist. Weiterhin dienen solche Filter je nach Ausführung auch zur Abscheidung von Feuchtemengen aus der angesaugten Luft (so genannte Kombinationsfilter zur Filtration und zur Abscheidung von Feuchtemengen).

Dessen ungeachtet weisen die aus dem Stand der Technik bekannten Filter der eingangs genannten Art jedoch nur eine begrenzte Beständigkeit gegen Feuchtigkeit auf. Insbesondere beim Einsatz in feuchten Gebieten, bspw. in küstennahen Landstrichen, ist die Haltbarkeit und Lebensdauer der bekannten Filter äußerst unbefriedigend. Die mit der Frischluft angesaugte Feuchtigkeit kondensiert im Ansauggehäuse oder feinste in der Frischluft enthaltene Wassertropfen setzen sich anströmseitig auf dem Filtermedium ab und fließen in Rinnsalen undefiniert davon. Dies ist besonders dann problematisch, wenn wie üblich Filterrahmen aus Papp-Karton verwendet werden. Die Ansammlung und ungenügende Ableitung von Wassertropfen auf der anströmseitigen Oberfläche des Filtermediums führt zudem zu einem hohen Druckverlust über den Filter (Reduzierung der Lebensdauer) und zu einer Verringerung der Filterwirkung bzw. Filtrationseigenschaften.

In der DE 200 10 383 U1 wird ein Filter vorgeschlagen, dessen Rahmen aus einem ABS-Kunststoff (Acrylnitril-Butadien-Styrol-Polymerisate) hergestellt ist, um die Feuchtebeständigkeit und Stabilität zu verbessern. Allerdings ist eine solche Lösung immer noch nicht zufrieden stellend, da bspw. keine definierte Ableitung des Wassers von der Filteroberfläche erfolgt, und das Wasser daher durchschlagen und nachgeordnete Baueinheiten wie Feinfilter und dgl. mit Wasser kontaminieren kann.

D1 (GB 2117 664 A) und D2 (US4897095) offenbaren ein flächiges Filtermedium das von einem Filterrahmen mit einer Flüssigkeitssammelvorrichtung an seinem tiefsten Abschnitt eingefasst ist. Die Flüssigkeitssammelvorrichtung wird durch eine wannenartige Profilierung des Filterrahmens mit einem vorderen Profilschenkel an der Anströmseite und einem hinteren Profilschenkel an der Abströmseite gebildet. Zur Entleerung der Flüssigkeitssammelvorrichtung weist der Filter ein Drainagerohr beziehungsweise eine Öffnung auf.

Aufgabe der Erfindung ist es, die Feuchtebeständigkeit eines Filters der gattungsgemäßen Art zu verbessern. Der erfindungsgemäße Filter soll aber auch einen einfachen Aufbau aufweisen und kostengünstig herstellbar sein.

Diese Aufgabe wird gelöst durch die Merkmale des kennzeichnenden Teils des Anspruches 1. Vorteilhafte Weiterbildungen sind Gegenstand der abhängigen Ansprüche. Der nebengeordnete Anspruch bezieht sich auf eine bevorzugte und besonders vorteilhafte Verwendung eines solchen Filters für eine Energieerzeugungsanlage wie bspw. zur Frischluftversorgung einer Gasturbine.

Erfindungsgemäß ist vorgesehen, dass der Filterrahmen, der zumindest abschnittsweise und vorzugsweise vollständig das flächig verlegte Filtermedium und insbesondere das Z-förmig gefaltete und flächig verlegte Filtermedium umgibt bzw. umschließt, zumindest an einer Stelle eine Flüssigkeitssammelvorrichtung aufweist. Die sich auf der Filtermediumoberfläche ansammelnden Wassertropfen fließen in Rinnsalen in Richtung des Filterrahmens ab und gelangen in die Flüssigkeitssammelvorrichtung bzw. -auffangvorrichtung, wo die Flüssigkeit dann bis auf weiteres zurückgehalten wird. In einer besonders zuverlässigen Ausführungsform umgibt der Filterrahmen das Filtermedium vollständig. Mit dieser Ausführungsform kann eine besonders wasserdichte Anordnung des Filtermediums im Filterrahmen erhalten werden, so dass herausragende Filtrationsergebnisse erreicht werden können. Z-förmig im Sinne der Erfindung bezieht sich dabei auf das Faltungsprofil des Filtermediums. Mit dem erfindungsgemäßen Filter mit Flüssigkeitssammelvorrichtung gelingt es somit, die Feuchtebeständigkeit des Filters zu erhöhen und gleichzeitig die dem Filter nachgeschalteten Einrichtungen vor Staub und Feuchtigkeit (beispielsweise in Form von Wassertropfen) wirksam zu schützen. Ein erfindungsgemäßer Filter kann dabei beispielsweise Staubmengen insbesondere in Größenordnungen von einigen hundert Gramm aufnehmen.

Bei den aus dem Stand der Technik bekannten Filtern werden häufig Glasfasermatten oder dgl. als Filtermedium eingesetzt, die sich jedoch bei hohen Feuchtemengen und gleichzeitiger Beaufschlagung mit Staub, Salzen und anderen Verunreinigungen schnell zusetzen und verstopfen, was zu einem ungewollt hohen Druckverlust über den Filter führt. Außerdem kommt es häufig zu so genannten Feuchtedurchschlägen, die mit einer Kontamination der in Strömungsrichtung dem Filter nachgeschalteten Einrichtungen (wie Feinfilter und dgl.) einhergehen, wodurch schließlich auch die Lebensdauer dieser Einrichtungen reduziert wird. Diese Nachteile sind nun jedoch durch das erfindungsgemäße gezielte Auffangen und Rückhalten der auf dem Filtermedium abgeschiedenen Feuchtigkeit in der Flüssigkeitssammelvorrichtung wirkungsvoll behoben. Als ein wesentlicher Vorteil ist hier vor allem die Verlängerung der Standzeiten hervorzuheben, was auch den erforderlichen Wartungsaufwand reduziert. Zudem ist der erfindungsgemäße Filter in der Verwendung als Luftfilter hervorragend in Gebieten mit höheren Luftfeuchten einsetzbar, ohne dass, wie bisher üblich, das Vorsetzen eines separaten Feuchte- bzw. Wasserabscheiders erforderlich ist.

Meist werden die Filter stehend (vertikal) im Ansauggehäuse angeordnet. Bevorzugt ist daher die Flüssigkeitssammelvorrichtung an einem tiefsten Abschnitt des Filterrahmens, bezogen auf die Einbaulage des Filters, angeordnet, da die an der anströmseitigen Filtermedienoberfläche abperlende Flüssigkeit infolge der Gravitation im wesentlichen nach unten abgeleitet wird. So kann z.B. bei einem rechteckig oder quadratisch ausgebildeten Filter der untere Rahmenabschnitt komplett über die gesamte Breite des Filters als Flüssigkeitssammelvorrichtung ausgebildet sein, einschließlich einer etwaigen Unterteilung in mehrere einzelne Kammerabschnitte bzw. Segmente zur Steigerung der Steifigkeit des Rahmens.

Als Flüssigkeit wird im Sinne dieser Anmeldung hauptsächlich Wasser im flüssigen Aggregatszustand aufgefasst.

Als Feuchte wird im Sinne dieser Anmeldung vorrangig Wasserdampf im gasförmigen Aggregatszustand aufgefasst, oder aber auch in der Luft enthaltene kleinere Wassertropfen.

Die Flüssigkeitssammelvorrichtung ist durch eine wannenartige bzw. wannenförmige Profilierung des Filterrahmens (im Querschnitt betrachtet) gebildet. Das Rahmenprofil weist dabei einen vorderen anströmseitigen Profilschenkel (bzw. Rahmenschenkel), einen hinteren abströmseitigen Profilschenkel (bzw. Rahmenschenkel) und einen Verbindungsabschnitt (bzw. Verbindungssteg) zwischen diesen beiden Profilschenkeln auf, die zusammen den Außenumfangsrand des Filtermediums quasi U-förmig und damit formschlüssig umgreifen und fixieren. In einfacher Weise werden somit die Funktionen der Flüssigkeitsansammlung und -rückhaltung und die Stütz- und Haltfunktion für das Filtermedium zusammengeführt. Anders formuliert ist die Flüssigkeitssammelvorrichtung überzeugend einfach im Halterahmen integriert und trägt damit zu einer insgesamt kompakten Bauweise des Filters bei.

Der vordere Profilschenkel (an der Anström- bzw. Anströmungsseite des Filtermediums) bezogen auf den Verbindungsabschnitt ist niedriger ausgebildet bzw. weist eine geringere Schenkellänge auf, als der hintere Profilschenkel auf der Abströmseite. Ab einer bestimmten Füllhöhe in der wannenartigen Flüssigkeitssammelvorrichtung läuft die angesammelte und zurückgehaltene Flüssigkeit am niedrigeren vorderen Rahmenschenkel über und kann an der Rohluftseite (Anströmungsseite) aus dem Ansauggehäuse austreten, bspw. entgegen der Ansaugströmung ausfließen. Dem Filter nachgeschaltete Einrichtungen werden somit nicht kontaminiert. Ein solches Überlauf-Prinzip besticht durch einfache Ausführbarkeit und besonders hohe Funktionszuverlässigkeit. In einer Fortführung dieser Idee können am vorderen Profilschenkel spezielle Drainagen vorgesehen sein, oder das obere Ende des Profilschenkels kann entgegen der Anströmrichtung abgekragt sein bzw. an dieser Stelle kann eine vorstehende Lippe ausgebildet sein, um das Abfließen der mit Oberflächenspannung behafteten Flüssigkeit zu erleichtern.

Besonders bewährt hat sich, die vorstehend beschriebene wannenartige bzw. wannenförmige Profilierung des Filterrahmens und insbesondere die niedrigere Ausbildung des vorderen Profilschenkels in Relation zum hinteren Profilschenkel an mehreren Seiten des Rahmens und ganz besonders an zwei sich gegenüberliegenden Seiten oder an allen Seiten des Rahmens auszubilden. Diese Ausführungsform ist insofern besonders günstig, als dass es bei der Installation nicht darauf ankommt, dass die eine bestimmte Seite, die die wannenartige bzw. wannenförmige Profilierung des Filterrahmens aufweist, untenliegend angeordnet ist. Für die Ausführungsform mit der wannenartigen bzw. wannenförmigen Profilierung an gegenüberliegenden Seiten ergibt sich vielmehr für den Installateur die Möglichkeit, den Filterrahmen in zwei Positionen (zueinander um 180° gedreht) einzubauen, womit eine im Hinblick auf Installationsfehler besonders sichere Anordnung erhalten wird, da zwei Seiten des eingebauten Rahmens eine zur Flüssigkeitssammlung und -ableitung geeignete Profilierung aufweisen.

In einer weiterhin bevorzugten Weiterbildung der Erfindung ist vorgesehen, dass das Filtermedium strömungstechnisch optimiert ist. Dies kann beispielsweise dadurch erreicht werden, dass das Filtermedium gefaltet bzw. wechselseitig geknickt ist, wobei die Faltlinien im Wesentlichen senkrecht zu der Oberfläche der angesammelten Flüssigkeit in der Flüssigkeitssammelvorrichtung verlaufen. Auf diese Weise wird die an der Filtermediumoberfläche abperlende Flüssigkeit direkt in die Flüssigkeitssammelvorrichtung hineingeleitet, wobei die Faltungen als Drainage bzw. Sammel- und Abflusskanäle dienen. Eine Faltung des Filtermediums führt fernerhin zu einer größeren Filteroberfläche und damit zu einem geringeren Druckverlust über den Filter. Besonders bevorzugt ist dabei aufgrund der herausragenden strömungstechnischen Eigenschaften eine Faltung des Filtermediums in der Weise, dass ein im Wesentlichen Z-förmiges Profil erhalten wird.

Es ist ferner vorteilhaft, dass das Filtermedium an der Anströmseite (= Rohluftseite) eine Spitzenverleimung aufweist, wodurch die Feuchtebeständigkeit und die mechanische Stabilität des Filtermediums, insbesondere die Berststabilität, deutlich verbessert wird. Die Spitzenverleimung ist bevorzugt in Form einer oder mehrerer Leimspuren aufgebracht, welche die vorderen Faltlinien bzw. Faltspitzen tangieren und miteinander querverbinden. Der erfindungsgemäße Filter hält damit Differenzdrücken von mehr als 2000 Pa stand. Hierzu ist anzumerken, dass die sich auf dem Filtermedium abscheidende Feuchtigkeit eine permanente Gewichtsbelastung für das Filtermedium darstellt. Die Spitzenverleimung verhindert aber ein so genanntes Kollabieren des Filters auch bei höheren Luftströmen und/oder höheren Staub- bzw. Feuchteanteilen.

Es ist auch bevorzugt, dass auf der Abströmseite (= Reinluftseite) zur Stützung des Filtermediums ein oder mehrere, vorzugsweise zwei bis drei, Filterkämme angeordnet sind, die kammartig auf der Rückseite in die Faltung des Filtermediums eingreifen und am Filterrahmen befestigt sind. Mithilfe der Filterkämme kann somit die mechanische Stabilität des Filtermediums, insbesondere die Berststabilität, erheblich gesteigert werden. Dies gelingt besonders gut, wenn zwei bis drei Filterkämme zueinander und zu dem Ober- und Unterteil des Rahmens gleichmäßig zueinander beabstandet sind.

Ferner ist es vorteilhaft, auch den bzw. die Filterkämme strömungstechnisch optimiert auszubilden. Dazu hat es sich als besonders effizient erwiesen, Filterkämme mit einem V-förmigen Querschnitt zu verwenden. Der Filterkamm ist bei dieser Ausführungsform zum Filter hin somit dünner als an seiner dem Filter abgewandten Seite, womit sich ein bezüglich des Querschnitts im Wesentlichen keilförmiges Profil ergibt. Durch den keilförmigen und sich in Strömungsrichtung verbreiternden Querschnitt der Filterkämme sind die Filterkämme besonders biegestabil und damit besonders widerstandsfähig speziell gegenüber durch das Filtermedium auf die Filterkämme in Strömungsrichtung ausgeübte Kräfte. Diese Ausführungsform weist somit neben günstigen strömungstechnischen Eigenschaften auch noch eine besonders hohe Berststabilität auf.

Besonders herausragend im Hinblick auf die mechanische Stabilität des Filtermediums, insbesondere hinsichtlich der Berststabilität, ist die Kombination der vorstehend beschriebenen Filterkämme mit der Spitzenverleimung, d.h. der gleichzeitigen Verwendung von Mitteln, die stabilisierend auf das Filtermedium auf der Anströmseite, und von Mitteln, die stabilisierend auf das Filtermedium auf der Abströmseite wirken.

Bevorzugt ist das Filtermedium aus einem hydrophoben (d.h. wasserabstoßenden) und synthetischen Filtermaterial gebildet, das frei von Imprägnierungen und/oder organischen Materialbestandteilen ist. Dieses Material sammelt die in der Anströmluft enthaltenen Feuchtemengen an seiner anströmseitigen Oberfläche an und leitet diese erfindungsgemäß in die Flüssigkeitssammelvorrichtung ab. Das Filtermedium wird selbst bei direkter Wasserbeauschlagung nicht durchgeweicht, wodurch auch ein Durchschlagen von Wasser bzw. Feuchtigkeit sicher vermieden wird. Der erfindungsgemäße Filter kann mit einem solchen Filtermaterial selbst einer direkten Wasserbeaufschlagung standhalten. Ein solches Filtermedium können insbesondere synthetische Medien sein. Vorteilhafterweise werden zur Erreichung der hohen Hydrophobität keine chemischen Zusatzstoffe und insbesondere keine Imprägnierungen verwendet. Da auch bevorzugt keinerlei organische Materialien verwendet werden, ist insbesondere im Neuzustand ein Befall mit Mikroorganismen unwahrscheinlich und auch eine hohe Resistenz gegenüber Keimwachstum gegeben. Der Einsatzbereich eines solchen Filtermediums erstreckt sich nicht nur auf hohe Feuchtemengen in der angesaugten Luft, sondern auch auf einen hohen Temperaturbereich von -30°C bis +70°C und häufigen Temperaturschwankungen in diesem Bereich.

Der Filterrahmen des erfindungsgemäßen Filters kann selbstverständlich einteilig oder mehrteilig ausgebildet sein. Es ist vorgesehen, dass der Filterrahmen bzw. einzelne Rahmenteile aus ABS-Kunststoff (Acrylnitril-Butadien-Styrol-Polymerisate) gebildet ist bzw. sind. Ein solches Material erweist sich in vielerlei Hinsicht (bspw. Formbeständigkeit, Stabilität, Wasserbeständigkeit, Kosten) als besonders vorteilhaft für die Rahmenstruktur.

Weiterhin ist vorzugsweise vorgesehen, dass die Abdichtung der einzelnen Rahmenteile, die die Flüssigkeitssammelvorrichtung bilden und/oder begrenzen, mittels von Polyurethan und insbesondere 2-Komponenten-Polyurethan erfolgt. Das Dichtmaterial ist dabei bevorzugt auf der Innenseite der wannenartigen Profilstruktur, die von vorderem Profilschenkel, hinterem Profilschenkel und Verbindungsabschnitt gebildet ist, angebracht. Die Abdichtung umfasst auch die etwaigen Übergänge zu angrenzenden Rahmenteilen. In der Gesamtheit erfolgt die Abdichtung vorzugsweise den inneren Randbereich des Filtermediums vollständig umlaufend bzw. umschließend, da so eine besonders wasserdichte Anordnung realisiert werden kann. Der genannte Werkstoff weist gute Verarbeitungseigenschaften und eine hervorragende Alterungs- und Wasserbeständigkeit auf. Um eine Beschädigung der Abdichtung beim Verbau bzw. der Montage des Filters zu vermeiden, ist die Innenauskleidung des wannenartigen Bereichs gegenüber anderen Lösungen bevorzugt.

In einer weiteren bevorzugten Ausführungsform ist ein Spalt zwischen dem hinteren Profilschenkel und der reinluftseitigen Oberfläche des Filtermediums und insbesondere den der Reinluftseite zugewandten Faltenspitzen des Filtermediums vorgesehen. Zur Rohluftseite hin grenzen dagegen wenigstens die der Rohluftseite zugewandten Faltenspitzen direkt an die Innenseite des vorderen Schenkels an. Diese Ausführungsform vereint gleich mehrere Vorteile. Einerseits kann an den der Rohluftseite zugewandten Faltenspitzen das Wasser direkt über das vordere Profil hinweg entgegen der Strömungsrichtung ablaufen und durchläuft somit nicht die Flüssigkeitssammelvorrichtung. Andererseits ist auf der Reinluftseite sichergestellt, dass das dort gegebenenfalls abperlende Wasser und insbesondere das an den der Reinluftseite zugewandten Faltenspitzen abperlende Wasser vollständig in die Flüssigkeitssammelvorrichtung einläuft und nicht über das hintere Profil hinweg zur Reinluftseite hin abläuft. Zudem ermöglicht diese Ausführungsform, dass die zur Reinluftseite hin aus dem Filtermedium austretende Luft unmittelbar hinter dem Filtermedium expandieren kann, womit besonders günstige Strömungsverhältnisse erhalten werden können.

Weitere Vorteile werden nun im Zusammenhang mit einem Ausführungsbeispiel anhand von Figuren beschrieben. Es zeigen:
- Fig. 1: einen erfindungsgemäßen Filter in Frontansicht auf die Anströmseite,
- Fig. 2: eine Schnittdarstellung des Filters aus Fig. 1, und
- Fig. 3: eine Schnitt-Detaildarstellung des Filters aus Fig. 1 und 2, die die Flüssigkeitssammelvorrichtung wiedergibt.

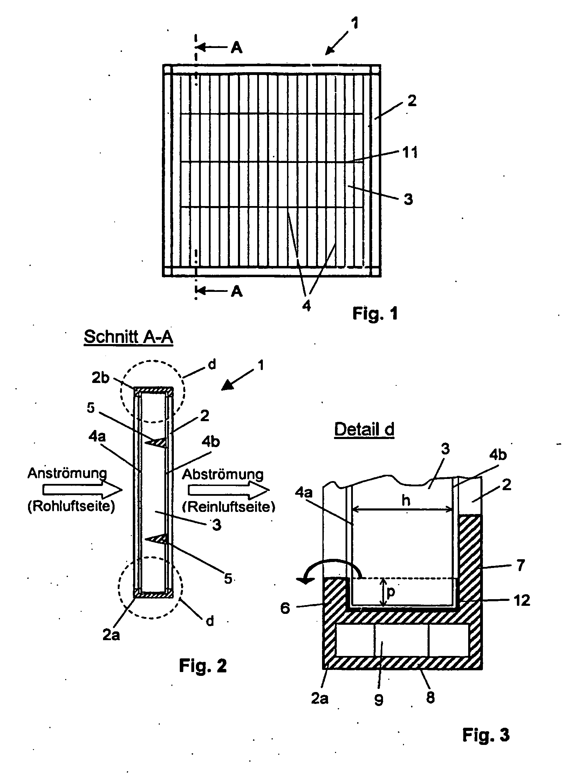

Die Fig. 1 zeigt eine beispielhafte Ausführung eines erfindungsgemäßen Filters 1 in rechteckiger bzw. quadratischer Form in Einbaulage mit Blick auf die Anströmseite bzw. Anströmungsseite. Der Filter 1 weist einen Filterrahmen 2 auf, der hier mehrteilig ausgeführt ist, wobei die einzelnen Rahmenteile (Oberteil, Unterteil, Seitenteile und Eckstücke) ineinander gesteckt und/oder verklebt bzw. verschweißt sind. Dieser Filterrahmen 2 umrandet komplett den Außenumfang bzw. die Außenumfangsflächen eines gefalteten Filtermediums 3 und sorgt zu wesentlichen Teilen für dessen notwendige mechanische Stabilität. Das gefaltete Filtermedium 3 ist ferner an allen vier Seiten des Filterrahmens 1 mit Polyurethan eingeklebt, so dass das Filter 1 sehr dicht gegen Wasser ist. Bezugszeichen 4 bezieht sich auf die sichtbaren Faltlinien des Filtermediums 3, wobei abwechselnd eine vordere und hintere Faltlinie zu sehen ist. Das Filtermedium 3 dient der Filtration eines durchströmenden Gases bzw. eines Luftstroms und der Abscheidung von insbesondere Staub. Daneben können auch Feuchtemengen bzw. Wasser aus diesem durchtretenden Volumenstrom abgeschieden werden.

Mit 11 sind Leimbahnen einer Spitzenverleimung bezeichnet, welche die vorderen Faltlinien horizontal (bezogen auf die Einbaulage) verbinden, was die Stabilität des Filtermediums 3 verbessert und insbesondere ein Kollabieren desselbigen verhindert. Die Spitzenverleimung ist dabei aber so ausgeführt, dass sie an keiner Stelle bis zum Rahmen 2 heranreicht.

Das Filtermedium 3 ist in den Rahmen 2 quasi eingesteckt und wird dort formschlüssig gehalten, kann aber je nach Ausführungsform, wie vorstehend erläutert, insbesondere auch an allen vier Seiten eingeklebt sein.

Im Übrigen ist ein solcher Filter 1 selbstverständlich auch in anderen Umrissformen denkbar, bspw. oval oder kreisförmig. Auch ist eine einteilige Ausführung des Rahmens 2 möglich.

Fig. 2 zeigt eine Schnittansicht entlang der Schnittlinie A-A gemäß Fig. 1. Das gefaltete Filtermedium 3 weist eine Anströmseite und eine Abströmseite bzw. Abströmungsseite auf. Der Gas- bzw. Luftvolumenstrom ist durch Pfeile dargestellt. Die Bezugszeichen 4a und 4b beziehen sich auf eine vorderen und hintere Faltlinien des gefalteten Filtermediums 3. Mit 2a ist ein unteres Rahmenteil (Rahmenunterteil) und mit 2b ein oberes Rahmenteil (Rahmenoberteil) bezeichnet. Wie aus der Schnittdarstellung hervorgeht umgreifen das untere und das obere Rahmenteil 2a und 2b U-förmig und damit formschlüssig den Rand des gefalteten Filtermediums 3. Selbiges gilt für die seitlichen Rahmenteile (nicht dargestellt). Ein rechter Winkel zwischen den Profilschenkeln 6 und 7 und dem Verbindungsabschnitt 8 wie gezeigt ist dabei nicht zwingend erforderlich.

Ferner sind abströmungsseitig (d.h. auf der Reinluftseite) zwei Kämme 5 vorhanden (mit gestrichelten Linien angedeutet), die über die Fläche des Filtermediums parallel zur Unterseite des Filterrahmens 2 verlaufen. Die Kämme 5 verlaufen somit auch parallel zu den anströmungsseitig in Figur 1 vorhandenen Leimspuren 11 der Spitzenverleimung. Die Kämme 5 sind zum Eingriff in die Faltung des Filtermediums 3 ausgebildet, weisen somit ein Profil auf. In ihren Randbereichen sind die Kämme 5 jeweils am Filterrahmen 2 befestigt, d.h. jeder Kamm 5 ist jeweils mit den beiden sich gegenüberliegenden Rahmenseitenteilen verbunden. Zur mechanischen Stabilität des gefalteten Filtermediums 3 tragen somit gleichzeitig die Leimspuren 11 der Spitzenverleimung und die Kämme 5 bei. Die Kämme 5 sind ferner im Querschnitt keilförmig ausgebildet, wobei sich die Kämme von ihrer spitzen Seite in Strömungsrichtung, d.h. zur Reinluftseite hin, verbreitern.

Fig. 3 zeigt eine Detail-Schnittdarstellung des Rahmenunterteils 2a aus der Fig. 2. Das Rahmenunterteil 2a weist einen vorderen anströmseitigen Profilschenkel (bzw. Rahmenschenkel) 6 und einen hinteren abströmseitigen Profilschenkel (bzw. Rahmenschenkel) 7 auf, die durch einen Verbindungsabschnitt (bzw. Verbindungssteg) 8 miteinander materialschlüssig verbunden sind. Der Verbindungsabschnitt 8 des unteren Profilschenkels 2a weist eine Hohlstruktur 9 auf, die einerseits die Elastizität des Profilschenkels erhöht, andererseits auch dem Einstecken der die Rahmenteile verbindenden Eckstücke dient, die entsprechende Steckverbindungen aufweisen. Auch die restlichen Rahmenteile können im übrigen solche Hohlstrukturen aufweisen, was letztlich auch einem Leichtbaugedanken Rechnung trägt. Gemäß Fig. 2 ist im Übrigen auch im Rahmenoberteil 2b ein vorderer anströmseitiger Profilschenkel 6 und ein hinterer abströmseitiger Profilschenkel 7 vorgesehen, wobei der vordere Profilschenkel 6 in seiner vertikalen Länge kürzer als der hintere Profilschenkel 7 ist. Entsprechend kann das Filter 1 beispielsweise auch um 180° gedreht installiert werden, ohne dass die Funktionalität der flüssigkeitssammelnden Eigenschaften des Filters 1 beeinträchtigt werden würde, da auch dann eine erfindungsgemäße Flüssigkeitssammelvorrichtung im dann unten liegenden Rahmenunterteil vorhanden ist.

Am Filtermedium 3 wird neben Feuchtigkeit (anströmseitig) ganz besonders Staub (bzw. staubförmige Verunreinigungen) vom durchströmenden Gas (insbesondere Luft) abgeschieden. Vom durchströmenden Gas abgeschiedene Feuchtigkeit (insbesondere Wasser) wird dann aufgrund der Schwerkraft und mittels Unterstützung der Faltung des Filtermediums 3 in einen wannenartigen Abschnitt des unteren Rahmenteils 2a abgeleitet bzw. drainiert. Dieser wannenartige Abschnitt des unteren Rahmenteils 2a ist aus dem vorderen Profilschenkel 6, dem hinteren Profilschenkel 7 und dem Verbindungsabschnitt 8 gebildet, die gleichzeitig den unteren Rand des Filtermediums 3 formschlüssig umgreifen. Dieser wannenartige Bereich ist speziell als Flüssigkeitssammelvorrichtung ausgebildet und dient dem gezielten Auffangen und Rückhalten der auf dem Filtermedium abgeschiedenen Feuchtigkeit. Wegen des ausgenützten Schwerkrafteffekts ist die Flüssigkeitssammelvorrichtung an einem tiefsten Einbaupunkt des Filters 1 angeordnet. Selbstverständlich können auch mehrere Flüssigkeitssammelvorrichtungen an einem Filter angeordnet sein. Im dargestellten Ausführungsbeispiel ist das gesamte untere Rahmenteil 2a wannenartig und damit als Flüssigkeitssammelvorrichtung ausgebildet. Diese Flüssigkeitssammelvorrichtung kann jedoch durch Querrippen in einzelne Sektionen unterteilt sein, die auch untereinander zum Niveauausgleich verbunden sein können.

Wie bereits erläutert wird die auf der Anströmseite des Filtermediums 3 abgeschiedene Flüssigkeit in die Flüssigkeitssammelvorrichtung abgeleitet und dort zuverlässig zurückgehalten, wodurch Feuchtdurchschläge vermieden werden, die dem Filter nachfolgende Einheiten wie bspw. Feinfilter oder dgl. kontaminieren und beschädigen könnten.

Erreicht der Flüssigkeitsstand (bzw. das Niveau oder der Pegel) in der Flüssigkeitssammelvorrichtung eine konstruktiv vorgegebene Maximalhöhe p, so läuft die Flüssigkeit über den oberen Rand des vorderen Profilschenkels 6 gemäß der Pfeildarstellung in Fig. 3 und tritt entgegen des Gas- bzw. Luftvolumenstroms definiert aus dem Filter 1 aus. Zur gezielten Ausleitung der Flüssigkeit aus dem nicht dargestellten Ansauggehäuse können weitere Maßnahmen getroffen werden. Die wesentliche Idee hierbei ist, dass der vordere Profilschenkel 6 bezogen auf den Verbindungsabschnitt 8 kürzer als der hintere Profilschenkel 7 ausgeführt ist, so dass sichergestellt ist, dass die Flüssigkeitsableitung sozusagen nach vorne erfolgt, womit eine Kontaminierung im Luftstrom nachgeordneter Einheiten wie Feinfilter und dgl. wirkungsvoll und dauerhaft verhindert wird.

Zur Unterstützung der Ableitung kann das obere Ende des vorderen Profilschenkels 6 mit einer Drainage versehen sein, die das Ableiten bzw. die Drainage trotz zum Teil hoher Oberflächenspannungen in der angesammelten Flüssigkeiten erleichtert.

Die Abdichtung des wannenartigen Bereichs erfolgt durch eine auf der Innenseite (d.h. auf den dem Filtermedium 3 zugewandten Flächenabschnitten der Profilschenkel 6 und 7 und des Verbindungsabschnitts 8) aufgebrachte Beschichtung 12, die bspw. aus einem Zwei-Komponenten Polyurethan besteht. Das Abdichtmaterial kann dabei nur in einzelnen Bereichen aufgebracht sein, oder die gesamte Flüssigkeitssammelvorrichtung auskleiden.

## Patentansprüche

1. Filter (1) zur Filtration von gasförmigen Medien, insbesondere zur Filtration von Luft, der eine Anströmseite und eine Abströmseite aufweist, mit einem flächigen Filtermedium (3), welches zumindest abschnittsweise und insbesondere vollständig von einem Filterrahmen (2) eingefasst ist, wobei der Filterrahmen (2) zumindest an einer Stelle eine Flüssigkeitssammelvorrichtung aufweist, die bevorzugt an einem tiefsten Abschnitt des Filterrahmens (2), bezogen auf die Einbaulage, angeordnet ist und wobei die Flüssigkeitssammelvorrichtung durch eine wannenartigen Profilierung des Filterrahmens (2) mit einem vorderen Profilschenkel (6) an der Anströmseite, einem hinteren Profilschenkel (7) an der Abströmseite und einem Verbindungsabschnitt (8) zwischen diesen Profilschenkeln (6, 7), die zusammen den Außenumfangsrand des Filtermediums (3) formschlüssig umgreifen, gebildet ist, **dadurch gekennzeichnet, dass** der vordere Profilschenkel (6) bezogen auf den Verbindungsabschnitt (8) eine niedrigere Schenkellänge aufweist, als der hintere Profilschenkel (7).

2. Filter (1) nach Anspruch 1, **dadurch gekennzeichnet, dass** zwei sich gegenüberliegende Seiten des Filterrahmens (2) die wannenartige Profilierung des Filterrahmens (2) aufweisen.

3. Filter (1) nach einem der Ansprüche 1 oder 2, **dadurch gekennzeichnet, dass** das Filtermedium (3) gefaltet ist, wobei die Faltlinien (4, 4a, 4b) im Wesentlichen senkrecht zu einer gedachten Oberfläche der angesammelten Flüssigkeit in der Flüssigkeitssammelvorrichtung verlaufen.

4. Filter (1) nach Anspruch 3, **dadurch gekennzeichnet, dass** das Filtermedium (3) an der Anströmseite wenigstens eine quer zu den vorderen Faltlinien (4a) verlaufende Spitzenverleimung (11) aufweist, bevorzugt in Form einer Leimspur welche die vorderen Faltlinien (4a) tangiert.

5. Filter (1) nach einem der vorhergehenden Ansprüche, **dadurch gekennzeichnet, dass** das Filtermedium (3) im Wesentlichen aus einem hydrophoben und synthetischen Material gebildet ist, das frei von Imprägnierungen und/oder organischen Bestandteilen ist.

6. Filter (1) nach einem der vorhergehenden Ansprüche, **dadurch gekennzeichnet, dass** eine Abdichtung (12) der einzelnen Rahmenteile des Filterrahmens (2), die die Flüssigkeitssammelvorrichtung bilden und/oder begrenzen, mittels von Zwei-Komponenten Polyurethan erfolgt.

7. Filter (1) nach einem der vorhergehenden Ansprüche, **dadurch gekennzeichnet, dass** der Filterrahmen (2) oder einzelne Rahmenteile dieses Filterrahmens aus ABS-Kunststoff gebildet ist bzw. sind.

8. Filter (1) nach einem der vorhergehenden Ansprüche, **dadurch gekennzeichnet, dass** das auf der Abströmseite zur Stützung des Filtermediums (3) Filterkämme (5) angeordnet sind.

9. Filter (1) nach Anspruch 8, **dadurch gekennzeichnet, dass** die Filterkämme (5) strömungstechnisch optimiert mit einem V-förmigen Querschnitt ausgebildet sind.

10. Verwendung eines Filters (1) nach einem der vorherigen Ansprüche in einer Energieerzeugungsanlage, insbesondere zur Filtration der Luftversorgung einer Gasturbine.

## Claims

1. A filter (1) for the filtration of gaseous media, in particular for the filtration of air, which has an inflow side and an outflow side, having a planar filter medium (3), which is bordered at least sectionally and in particular completely by a filter frame (2), the filter frame (2) having a liquid collection device on at least one point, which is preferably arranged on a lowest section of the filter frame (2), in relation to the installation location, and the liquid collection device being formed by a trough-like profile of the filter frame (2) having a front profile leg (6) on the inflow side, a rear profile leg (7) on the outflow side, and a connection section (8) between these profile legs (6, 7), which together enclose the outer peripheral edge of the filter medium (3) in a formfitting manner, **characterized in that** the front profile leg (6) has a lesser leg length than the rear profile leg (7) in relation to the connection section (8).

2. The filter (1) according to Claim 1, **characterized in that** two opposing sides of the filter frame (2) have the trough-like profile of the filter frame (2).

3. The filter (1) according to one of Claims 1 or 2, **characterized in that** the filter medium (3) is folded, the fold lines (4, 4a, 4b) extending essentially perpendicular to an imaginary surface of the collected liquid in the liquid collection device.

4. The filter (1) according to Claim 3, **characterized in that** the filter medium (3) has at least one tip glued area (11), extending transversely to the front fold lines (4a), preferably in the form of a glue bead which is tangent to the front fold lines (4a).

5. The filter (1) according to one of the preceding claims, **characterized in that** the filter medium (3) is essentially formed from a hydrophobic and synthetic material, which is free of impregnations and/or organic components.

6. The filter (1) according to one of the preceding claims, **characterized in that** a seal (12) of the individual frame parts of the filter frame (2) which form and/or delimit the liquid collection device is performed by means of two-component polyurethane.

7. The filter (1) according to one of the preceding claims, **characterized in that** the filter frame (2) or individual frame parts of this filter frame is/are formed from ABS plastic.

8. The filter (1) according to one of the preceding claims, **characterized in that** filter combs (5) are arranged on the outflow side to supporting the filter medium (3).

9. The filter (1) according to Claim 8, **characterized in that** the filter combs (5) are implemented having a V-shaped cross-section for optimized flow.

10. A use of a filter (1) according to one of the preceding claims in a power generation facility, in particular for filtration of the air supply of a gas turbine.

## Revendications

1. Filtre (1) pour la filtration de fluides gazeux, en particulier pour la filtration d'air, présentant un côté d'entrée et un côté de sortie, avec un support filtrant (3) plan qui est au moins en partie et en particulier entièrement pris dans un châssis de filtre (2), dans lequel le châssis de filtre (2) présente au moins à un endroit un dispositif collecteur de liquide qui est de préférence disposé dans la partie la plus basse du châssis de filtre (2) par rapport à la position de montage, et dans lequel le dispositif collecteur de liquide est formé par un profil en forme d'auge du châssis de filtre (2) avec un bras profilé antérieur (6) sur le côté d'entrée, un bras profilé postérieur (7) sur le côté de sortie et une partie de liaison (8) entre ces bras profilés (6, 7), qui entourent ensemble le bord de circonférence extérieure du support filtrant (3), **caractérisé en ce que** le bras profilé antérieur (6) présente une plus petite longueur de bras par rapport à la partie de liaison (8) que le bras profilé postérieur (7).

2. Filtre (1) selon la revendication 1, **caractérisé en ce que** deux côtés du châssis de filtre (2) se faisant face présentent le profil en forme d'auge du châssis de filtre (2).

3. Filtre (1) selon l'une des revendications 1 ou 2, **caractérisé en ce que** le support filtrant (3) est plissé, les lignes de pliage (4, 4a, 4b) étant pour l'essentiel perpendiculaires à une surface imaginaire du liquide dans le dispositif collecteur de liquide.

4. Filtre (1) selon la revendication 3, **caractérisé en ce que** le support filtrant (3) présente du côté d'entrée au moins un collage des pointes (11) perpendiculaire aux lignes de pliage antérieures (4a), de préférence sous la forme d'un trait de colle tangent aux lignes de pliage antérieures (4a).

5. Filtre (1) selon l'une des revendications précédentes, **caractérisé en ce que** le support filtrant (3) est pour l'essentiel formé d'un matériau hydrophobe et synthétique sans imprégnations ni composants organiques.

6. Filtre (1) selon l'une des revendications précédentes, **caractérisé en ce qu'**une étanchéité (12) des différentes parties de châssis du châssis de filtre (2) qui forment et/ou délimitent le dispositif collecteur de liquide est réalisée au moyen de polyuréthane bicomposant.

7. Filtre (1) selon l'une des revendications précédentes, **caractérisé en ce que** le châssis de filtre (2) ou certaines parties de châssis de ce châssis de filtre sont faits de plastique ABS.

8. Filtre (1) selon l'une des revendications précédentes, **caractérisé en ce que** des peignes (5) sont disposés sur la face de sortie pour soutenir le support filtrant (3).

9. Filtre (1) selon la revendication 8, **caractérisé en ce que** les peignes (5) sont techniquement optimisés en termes d'écoulement et conçus avec une section en forme de V.

10. Utilisation d'un filtre (1) selon l'une des revendications précédentes dans une installation de production d'énergie, en particulier pour la filtration de l'arrivée d'air d'une turbine à gaz.
